(19) Europäisches Patentamt / European Patent Office / Office européen des brevets

(11) **EP 4 410 879 A1**

(12) **EUROPEAN PATENT APPLICATION**
published in accordance with Art. 153(4) EPC

(43) Date of publication:
**07.08.2024 Bulletin 2024/32**

(21) Application number: **22876408.0**

(22) Date of filing: **28.09.2022**

(51) International Patent Classification (IPC):
**C08J 9/22** $^{(2006.01)}$

(52) Cooperative Patent Classification (CPC):
**C08J 9/22**

(86) International application number:
**PCT/JP2022/036322**

(87) International publication number:
**WO 2023/054542 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 JP 2021162158**

(71) Applicant: **Asahi Kasei Kabushiki Kaisha Tokyo 1000006 (JP)**

(72) Inventor: **ONOE Takashi Tokyo 100-0006 (JP)**

(74) Representative: **D Young & Co LLP 3 Noble Street London EC2V 7BQ (GB)**

(54) **POLYAMIDE RESIN FOAM PARTICLES, POLYAMIDE RESIN COMPOSITION, AND PRODUCTION METHOD**

(57) Polyamide-based resin foam particles have an average cell diameter of 5 to 150 μm. Polyamide-based resin foam particles satisfy at least one of the following (A) and (B): (A) the ratio of X/Y of the internal communication ratio (X) to the closed cell ratio (Y) is 0.25 or less; and (B) the ratio Z/Y of the continuous cell ratio (Z) to the closed cell ratio (Y) is 0.25 or less.

Fig 1

**Description**

CROSS-REFERENCE OF RELATED APPLICATION

This application claims priority to Japanese Patent Application No. 2021-162158, filed on September 30, 2021, the entire disclosure of which is incorporated herein by reference.

TECHNICAL FIELD

The present disclosure relates to polyamide-based resin foam particles, a polyamide-based resin composition, and a production method.

BACKGROUND

In recent years, reduction in the weights of automotive bodies has been demanded as an environmental effort for reducing exhaust gases in the automotive industry. To meet this demand, members made from plastics that are lighter than other materials, such as metals, have been increasingly used as exterior and interior materials of automobiles.
In particular, expectations for foamed molded articles are growing to achieve further reduction in weights. Foamed articles which are generally used are produced from general-purpose resins such as polyethylene, polystyrene, and polypropylene. Such resins are inferior in heat resistance and thus cannot be used for automobile members or the like for which higher heat resistance is required.
On the other hand, engineering resins, and particularly polyamide resins, are known as plastics having high heat resistance in addition to excellent wear resistance, chemical resistance, and so forth. Accordingly, foamed molded articles of polyamide-based resins are considered to be of use in applications for which higher heat resistance is required.
Examples of techniques for producing resin foamed molded articles include extrusion foaming, foam injection molding, and in-mold foam shaping (also referred to as bead foam shaping).
Extrusion foaming is a method in which an organic or inorganic blowing agent is injected into a molten resin using an extruder and the pressure is subsequently released at an outlet of the extruder to obtain a plate, sheet, or columnar foamed article having a specific cross-sectional shape, and then the foam is heat processed in a mold or is cut and adhered to shape the foam into a desired shape.
Foam injection molding is a method in which an expandable resin is injection molded and foamed in a mold to obtain a foamed molded article including pores.
In-mold foam molding is a method in which resin expandable particles are loaded into a mold, and are heated by steam or the like to cause foaming simultaneously with thermal fusion of the expandable particles to one another to obtain a foamed molded article. In-mold foam molding is widely used in industry due to advantages such as ease of freely setting the product shape, ease of obtaining a foamed molded article with a high expansion ratio, and so forth.
For example, polyamide-based resin foam particles applicable to the in-mold foam molding have been proposed (see PTLs 1 and 2).

CITATION LIST

PTL 1: JP 6653049 B
PTL 2: WO 2011/134996 A1

SUMMARY

(Technical Problem)

Foamed articles generally have reduced strength than non-foamed articles because of cells are formed inside. In the meantime, there is a need to improve the compressive strength of foamed articles in applications, such as those mentioned above. Although PTL 1 discloses providing polyamide-based resin foam particles with excellent compressive strength at high temperatures and in-mold moldability, it fails to disclose compressive strength from room temperature to in the vicinity of high temperatures, which is not improved. In addition, a chemical blowing agent is used for the resin foam particles disclosed in PTL 2, and the cells are connected to each other because of the production method, making imparting compressive strength difficult.
Accordingly, the present disclosure is directed to providing polyamide-based resin foam particles that allow for the formation of a foamed article with improved compression strength.

(Solution to Problem)

Specifically, this disclosure provides the following:

[1] Polyamide-based resin foam particles having an average cell diameter of 5 to 150 μm and satisfying at least one of the following (A) and (B):

(A) a ratio of X/Y of an internal communication ratio (X) to a closed cell ratio (Y) is 0.25 or less; and
(B) a ratio Z/Y of a continuous cell ratio (Z) to a closed cell ratio (Y) is 0.25 or less.

[2] The polyamide-based resin foam particles according to [1], wherein
wherein an expansion ratio is 2 to 6 cm$^3$/g
[3] The polyamide-based resin foam particles according to [1] or [2], wherein
wherein a thickness of a cell wall is 0.5 to 30 μm.
[4] The polyamide-based resin foam particles according to any one of [1] to [3], wherein
an average cell diameter near a surface layer / average cell diameter in an inside is 0.5 or less.
[5] The polyamide-based resin foam particles according to any one of [1] to [4], wherein a smallest cell diameter / a largest cell diameter is 1/10 or more and less than 1.
[6] A polyamide-based resin composition for producing the polyamide-based resin foam particles according to any one of [1] to [5], wherein
a crystallinity of a polyamide-based resin is 0.1 or less.
[7] A production method of polyamide-based resin foam particles, comprising:

a water absorption step of causing a polyamide-based resin composition to absorb water to a water absorption ratio of 6 mass% or more; and
an impregnation and foaming step of causing the polyamide-based resin composition in which water has been absorbed in the water absorption step to be impregnated with a foaming gas, and foaming to take place.

[8] The production method of polyamide-based resin foam particles according to [7], wherein
a water absorption temperature to the polyamide-based resin composition in the water absorption step is 0 to 100 °C.
[9] The production method of polyamide-based resin foam particles according to [7] or [8], wherein
a crystallinity of a water-containing polyamide-based resin composition after water absorption by the water absorption step is 0.3 or less.
[10] The production method of polyamide-based resin foam particles according to any one of [7] to [9], wherein
the crystallinity of the polyamide-based resin composition before water absorption by the water absorption step is 0.1 or less.

(Advantageous Effect)

According to the present disclosure, polyamide-based resin foam particles that allow for the formation of a foamed article with improved compression strength and a production method of the same can be provided.

BRIEF DESCRIPTION OF THE DRAWINGS

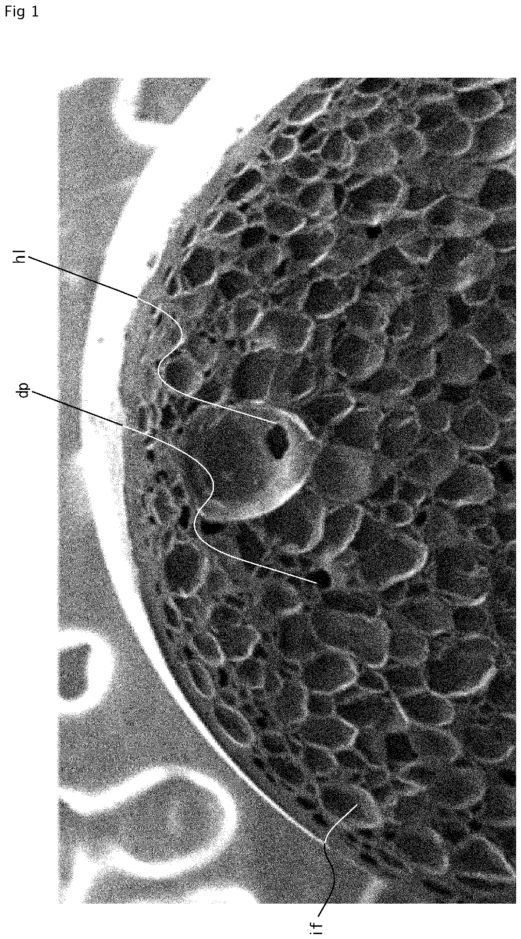

FIG. 1 is a magnified image of an SEM image to illustrate a specific example of dark portions and closed cells for calculating the internal communication ratio.

DETAILED DESCRIPTION

An embodiment of the present disclosure (hereinafter referred to as "the present embodiment") is described in detail below. The following embodiments merely exemplify the present disclosure. The present disclosure is not limited to the following embodiments and may be implemented with various alterations that are within the essential scope thereof.

[Polyamide-based resin foam particles]

Polyamide-based resin foam particles of the present embodiment refer to resin particles (beads or the like) that have a porous structure formed by foaming of a polyamide-based resin, and have not been subjected to a final stage of foaming and thus have expandability. Polyamide-based resin-based foam elements can be used, for example, as raw materials for foamed molded articles.

In the present embodiment, the average cell diameter of the polyamide-based resin foam particles is 5 to 150 $\mu$m. The average cell diameter is preferably 20 to 100 $\mu$m, more preferably 40 to 90 $\mu$m, and most preferably 60 to 80 $\mu$m. An average cell diameter of 5 $\mu$m or more can reduce the weight of a foamed article produced from the polyamide-based resin foam particles as compared to non-foamed articles. In addition, an average cell diameter of 150 $\mu$m or less can suppress the extreme decrease in strength of the foamed articles caused by the polyamide-based resin foam particles. The method of measuring the average cell diameter is specifically described in Examples below.

In the present embodiment, the internal communication ratio of the polyamide-based resin foam particles is preferably 20% or less. The internal communication ratio is the ratio of cells of which walls are partially missing and are in communication with adjacent cells. The internal communication ratio is more preferably 15% or less, even more preferably 10% or less, and most preferably 5% or less. When the internal communication ratio is 20% or less, the strength of a foamed article produced from the polyamide-based resin foam particles is improved because the internal communication ratio of the foamed article can be maintained low and the cell walls become more robust on average. The method of measuring the internal communication ratio is specifically described in Examples below.

In the present embodiment, the continuous cell ratio of the polyamide-based resin foam particles is preferably 20% or less. The continuous cell ratio is the ratio of the volume of cells of which walls are partially missing and which are connected to adjacent cells. The continuous cell ratio is more preferably 15% or less, even more preferably 10% or less, and most preferably 5% or less. A continuous cell ratio of 20% or less improves the strength of a foamed article produced from the polyamide-based resin foam particles because there are fewer connections between cells inside the foamed article and the cell walls become more robust on average. The method of measuring the continuous cell ratio is specifically described in Examples below.

In the present embodiment, the closed cell ratio of the polyamide-based resin foam particles is preferably 80% or more. The closed cell ratio is the ratio of the volume of the cells that are entirely enclosed by the walls to the volume of all cells. The closed cell ratio is more preferably 85% or more, even more preferably 90% or more, and most preferably 95% or more. A closed cell ratio of 80% or more imparts the ability to expand during molding, resulting in a foamed article without gaps and improved strength of the foamed article. The method of measuring the closed cell ratio is specifically described in Examples below.

In the present embodiment, the polyamide-based resin foam particles satisfy at least the following (A) and (B): (A) the ratio of X/Y of the internal communication ratio (X) to the closed cell ratio (Y) is 0.25 or less; and (B) the ratio Z/Y of the continuous cell ratio (Z) to the closed cell ratio (Y) is 0.25 or less.

The ratio X/Y of the internal communication ratio (X) to the closed cell ratio (Y) is preferably 0.20 or less, more preferably 0.15 or less, and most preferably 0.10 or less. A ratio X/Y of the internal communication ratio (X) to the closed cell ratio (Y) of 0.25 or less improves the strength of a foamed article even if the internal communication ratio and the closed cell ratio are out of the respective preferable ranges described above.

The ratio Z/Y of the continuous cell ratio (Z) to the closed cell ratio (Y) is preferably 0.20 or less, more preferably 0.15 or less, and most preferably 0.10 or less. A ratio Z/Y of the continuous cell ratio (Z) to the closed cell ratio (Y) of 0.25 or less improves the strength of a foamed article even if the continuous cell ratio and the closed cell ratio are out of the respective preferable ranges described above.

In the present embodiment, the expansion ratio of the polyamide-based resin foam particles is preferably 2 to 6 cm$^3$/g. The expansion ratio is more preferably 2.5 to 5 cm$^3$/g, and most preferably 3 to 4 cm$^3$/g. An expansion ratio of 2 cm$^3$/g or more can reduce the weight of a foamed article produced from the polyamide-based resin foam particles compared to non-foamed articles. An expansion ratio of 6 cm$^3$/g or less can suppress an extreme decrease in the strength of a foamed article produced from the polyamide-based resin foam particles. When the expansion ratio is 2.5 to 5 cm$^3$/g, the balance between the lightweightness and strength of the foamed article improves, with the optimum being achieved at 3 to 4 cm$^3$/g. The method of measuring the expansion ratio is specifically described in Examples below.

Note that the technical difficulty of maintaining a high internal communication ratio and continuous cell ratio increases as the expansion ratio is increased. The present disclosure solves the technical difficulty of keeping the relationship between the expansion ratio and at least one of the internal communication ratio and the continuous cell ratio within the above ranges.

In the present embodiment, the thickness of the cell wall of the polyamide-based resin foam particles is preferably 0.5 to 30 $\mu$m. The thickness of the cell wall is more preferably 1 to 15 $\mu$m, more preferably 2 to 10 $\mu$m, and most preferably 3 to 5 $\mu$m. When the thickness of the cell wall is 0.5 $\mu$m or more, the thickness of the cell wall of a foamed article produced from the polyamide-based resin foam particles can also be maintained, and each cell wall becomes robust, thereby improving the strength of the foamed article. When the thickness of the cell wall is 30 $\mu$m or less, the lightweightness of the foamed article can be maintained. The method of measuring the thickness of the cell wall is specifically described in Examples below.

In the present embodiment, a ratio of the average cell diameter near the surface layer to the average cell diameter in the inside of the polyamide-based resin foam particles is preferably 0.5 or less. The ratio is more preferably 0.4 or less, even more preferably 0.3 or less, and most preferably 0.2 or less. A ratio of the average cell diameter near the surface layer to the average cell diameter in the inside of 0.5 or less increases the density of the resin near the surface layer of the polyamide-based resin foam particles. Accordingly, in the molding of a foamed article by the bead foaming, the strength of the foamed article can be improved because the destruction of the surface layer caused by fusion with adjacent particles can be suppressed. Although we speculated that a similar effect was achieved by forming a skin layer near the surface layer, we discovered that cells with an average cell diameter ratio of 0.5 or less are important for further foaming during molding in bead foaming. Here, the surface layer of a polyamide-based resin foam particle refers to the layer near the surface of the polyamide-based resin foam particle on a plane perpendicular to the thickness direction, and the inside refers to any portion included between the surface layer.

In the present embodiment, the smallest cell diameter / largest cell diameter inside the polyamide-based resin foam particles is preferably 1/10 or more and less than 1. The smallest cell diameter / largest cell diameter is more preferably 1/5 or more and less than 1, even more preferably 1/2 or more and less than 1, and most preferably 2/3 or more and less than 1. When the smallest cell diameter / largest cell diameter approaches 1, the cell diameters become more uniform. This uniformity in cell diameter results in the uniform thickness of cell walls, making each cell wall robust. As a result, the strength of the foamed article is enhanced.

[Production method of polyamide-based resin foam particles]

A production method of polyamide-based resin foam particles of the present embodiment includes a water absorption step of causing the polyamide-based resin composition to absorb water to produce a water-containing polyamide-based resin composition; an impregnation step of impregnating the water-containing polyamide-based resin composition with a blowing gas to produce a blowing agent-impregnated polyamide-based resin composition; and a foaming step of foaming the blowing agent impregnated polyamide-based resin composition.

(Polyamide-based resin composition)

The polyamide-based resin composition before water absorption and impregnation with the foaming gas will be described below. The polyamide-based resin composition may or may not undergo structural changes during the water absorption step, the impregnation step, and the foaming step. The polyamide-based resin composition contains a polyamide-based resin. Examples of the polyamide-based resin include polyamide a homopolymer, a polyamide copolymer, or a mixture thereof, for example.

Examples of the polyamide homopolymer include, for example, nylon 66, nylon 610, nylon 612, nylon 46, nylon 1212, or the like that is obtained through polycondensation of a diamine and a dicarboxylic acid; and nylon 6, nylon 12, or the like that is obtained through ring-opening polymerization of a lactam. Examples of the polyamide copolymer include, for example, nylon 6/66, nylon 66/6, nylon 66/610, and nylon 66/612. Of these examples, aliphatic polyamides are preferable, and nylon 6, nylon 66, nylon 6/66, nylon 66/6, and the like are more preferable. One of these may be used individually, or two or more of these may be used in combination.

The melting point of the polyamide-based resin composition is preferably 170 °C or higher, and more preferably 180 °C or higher from the viewpoint of suppressing coloration of polyamide-based resin foam particles and ensuring sufficient heat resistance of the foamed molded article, and is preferably 270 °C or lower, and more preferably 250 °C or lower from the viewpoint of promote foaming of the blowing agent impregnated polyamide-based resin composition. As used herein, the melting point of the polyamide-based resin composition is a value measured in accordance with JIS K7121 by differential scanning calorimetry (DSC). Peaks appearing in measurement that indicate heat absorption are determined to be peaks that indicate melting of the resin and the melting point is determined to be the temperature corresponding to a peak indicating heat absorption that appears at the highest temperature. The measurement device that is used may be a commercially available differential scanning calorimeter such as DSC manufactured by PerkinElmer Inc. The measurement conditions may be commonly used conditions. For example, a nitrogen gas atmosphere may be adopted, and in terms of temperature conditions, the resin may be held at a temperature higher than the melting point thereof (e.g., at 300 °C for 5 minutes), may be subsequently cooled rapidly to approximately 50 °C at 20 °C/min, and may then be heated to higher than the melting point thereof (e.g., 300 °C) at 20 °C/min.

(Other components)

The polyamide-based resin composition may contain components other than polyamide-based resin to the extent that the object of the present disclosure is not impeded. Examples thereof include stabilizers particularly heat stabilizers, impact modifiers, flame retardants, lubricants, pigments, dyes, weather resistance modifiers, antistatic agents, impact resistance modifiers, crystal nucleating agents, glass beads, inorganic fillers, crosslinking agents, nucleating agents such as talc, and thermoplastic resins other than polyamide-based resins.

Examples of the above stabilizers that can be used include organic antioxidants and heat stabilizers such as hindered phenol antioxidants, sulfuric antioxidants, phosphoric antioxidants, phosphite compounds, and thioether compounds; light stabilizers and ultraviolet absorbers such as those based on hindered amines, benzophenone, and imidazole; and metal deactivators. One of these may be used individually, or two or more of these may be used in combination.

The content of such other components in the polyamide-based resin composition may be 15 parts by mass or less, and is preferably 6 parts by mass or less, more preferably 3 parts by mass or less per 100 parts by mass of the polyamide-based resin.

The polyamide-based resin composition may be uniformly mixed after each ingredient is added. The above polyamide-based resin composition may be in pellet form through melt-kneading and extrusion into strands from the viewpoint of facilitating the water absorption step. The diameter of pellets for polyamide-based resin foam particles, which are raw polyamide-based resin in pellet form, is preferably 1.5 mm or less, more preferably 1.0 mm or less, and even more preferably 0.9 mm or less. The polyamide-based resin composition is not limited to pellet form, but may be, for example, in the form of a sphere or macaroni.

Note that a compound, polymer, or the like including a substituent that can react with an amino group or carboxyl group in the polyamide-based resin composition may be used to increase the degree of crosslinking of the resin by forming a crosslinked structure via that substituent in molecule of the resin.

The crystallinity of the polyamide-based resin composition is preferably 0.1 or less. The crystallinity is more preferably 0.08 or less, more preferably 0.05 or less, and most preferably 0.01 or less. A crystallinity of 0.1 or less increases the amorphous portion and reduces the impregnation time in the impregnation step. Furthermore, the increase in the amorphous portion increases the amount of water absorbed in the water absorption step, resulting in a lower foaming temperature in the foaming step. The method of measuring the crystallinity is specifically described in Examples below. The crystallinity can be adjusted, for example, by rapidly cooling the polyamide-based resin composition during granulation to suppress crystallization.

(Water absorption step)

The method of causing polyamide-based resin composition to absorb water is not particularly limited, but may include methods such as immersing it in water for a certain time period (for example, 0.5 to 10 hours), storing it in a high-temperature humid environment (for example, at a temperature of 30 to 50 °C and a relative humidity of 50 to 95%) for a certain time period, or spraying water vapor for a certain duration.

The percentage of water (water absorption ratio) contained in the water-containing polyamide-based resin composition after the water absorption step is preferably 6 mass% or more, more preferably 8 mass% or more, even more preferably 10 mass% or more, and particularly preferably 12 mass% or more, with respect to 100 mass% of the polyamide-based resin composition, from the viewpoint of lowering the melting point of the polyamide and improving the foamability. In addition, the water absorption ratio is preferably 20 mass% or less, more preferably 18 mass% or less, even more preferably 16 mass% or less, and particularly preferably 14 mass% or less from the viewpoint of preventing a decrease in the quantity of heat due to excess water to the above during foaming. By controlling the water absorption ratio to the above range and reducing the uneven distribution of water inside the polyamide-based resin composition during water absorption, the internal communication ratio of polyamide-based resin foam particles can be reduced. The method of measuring the water absorption ratio is specifically described in Examples below. The water absorption ratio of the water-containing polyamide-based resin composition can be adjusted, for example, by adjusting water temperature, immersion time in water, conditions of storage after water absorption, and the like.

The water temperature in the water absorption step, in other words, the water absorption temperature, is preferably 0 to 100 °C. The water absorption temperature is preferably 15 to 85 °C, more preferably 30 to 70 °C, and even more preferably 40 to 60 °C. It is presumed that a water absorption temperature of 0 °C or higher increases the diffusion rate of water in the polyamide-based resin composition during water absorption, allowing water to be sufficiently absorbed to the center of the polyamide-based resin foam particles, thereby preventing the occurrence of foaming defects near the center. It is presumed that a water absorption temperature of 100 °C or lower increases amorphous portions of the polyamide-based resin by inhibiting the progress of crystallization during water absorption, resulting in an increase in the saturated water absorption ratio.

The crystallinity of the water-containing polyamide-based resin composition by the water absorption step is preferably 0.3 or less. The crystallinity is preferably 0.3 or less, more preferably 0.25 or less, even more preferably 0.2 or less, and particularly preferably 0.15 or less. A crystallinity of 0.3 or less increases the proportion of amorphous portions and suppresses the sudden change in melt viscoelasticity that occurs when crystals melt during foaming, and also lowers the foaming temperature. In addition, by suppressing the sudden change in melt viscoelasticity, the number of holes caused by the internal communication can be reduced, and at least one of the internal communication ratio and the continuous cell ratio can be kept low. The method of measuring the crystallinity is specifically described in Examples below. The crystallinity can be adjusted, for example, by rapidly cooling the polyamide-based resin composition during granulation to suppress crystallization, or by suppressing crystallization in the water absorption step.

The water-containing polyamide-based resin composition preferably contains the water uniformly from the viewpoint that the foaming temperature can be reduced and coloration during foaming can be further suppressed. For example, in a cross section in an arbitrary direction of the water-containing polyamide-based resin composition, when a line segment connecting arbitrary two ends of the cross section passing through the center of gravity of the cross section is drawn, the water absorption ratios in the area from 0 to 10% from one of the ends and in the area from 40 to 50% from that end are preferably both in the above range. The water absorption ratio of each of the above areas can be determined by measuring the water absorption ratio of each of the cut-out areas using the method described in Examples below.

Water adhering to the resin surface is preferably removed from the water-containing polyamide-based resin composition after water absorption. Methods to remove water from the surface include, for example, centrifugal dehydration of the resin. After the water absorption step, the water-containing polyamide-based resin composition may be used immediately for the next step or stored for a certain period of time. Storage methods include, for example, a method of storing it in an atmosphere containing water (e.g., under humidification). Among them, from the viewpoint of further reducing the foaming temperature and further effectively preventing coloration during foaming, it is preferably used in the subsequent step continuously after water absorption.

(Impregnation step and foaming step)

The method by which the water-containing polyamide-based resin composition is impregnated with the blowing agent is not specifically limited and may be a generally used method. The water-containing polyamide-based resin composition when impregnated with the blowing agent may be molten or in a solid form such as pellets. However, pellets are preferred.

Examples of such methods include a method in which an aqueous medium is used in a suspension of water or the like (suspension impregnation), a method in which a thermal decomposition-type blowing agent such as sodium bicarbonate is mixed (blowing agent decomposition), a method in which a gas is maintained in an atmosphere equal to or higher than the critical pressure, liquefied, and brought into contact with the base resin in a liquid state (liquid phase impregnation), and a method in which a gas is maintained in an atmosphere below the critical pressure, vaporized, and brought into contact with the base resin in a gas phase state (vapor phase impregnation). Vapor phase impregnation is particularly preferred as the method of impregnation with the blowing agent.

When water absorption and impregnation with the blowing agent are performed simultaneously by suspension impregnation or the like, it is difficult to obtain the effect of suppressing the foaming temperature and the effect of suppressing the coloration of polyamide-based resin foam particles because the water absorption becomes non-uniform and the water is not sufficiently absorbed. The blowing agent decomposition method is inconvenient as it is carried out under high-temperature conditions in the same way as suspension impregnation. Moreover, not all the thermal decomposition-type blowing agent that is added in the blowing agent decomposition method is converted to gas, and thus the amount of gas that is generated tends to be relatively small.

Compared to suspension impregnation carried out under high-temperature conditions, gas phase impregnation makes it easier to obtain a high blowing agent content because the gas has a higher solubility in the water-containing polyamide-based resin composition. Consequently, it is easier to achieve a high expansion ratio and uniform cell size in the obtained polyamide-based resin composition when gas phase impregnation is adopted. Moreover, compared to liquid phase impregnation, gas phase impregnation allows the use of more compact equipment, such as pressure-resistant apparatus and cooling apparatus, and facilitates equipment cost reduction.

Although the conditions of gas phase impregnation are not specifically limited, an ambient pressure of 0.5 MPa to 6.0 MPa and an ambient temperature of 5 °C to 30 °C is preferable from a viewpoint of causing the gas to dissolve in the water-containing polyamide-based resin composition more efficiently.

Here, the above blowing agent is not limited, and examples include air or compounds that can be set in a gaseous state. Examples of compounds that can be set in a gaseous state include inorganic compounds such as carbon dioxide, nitrogen, oxygen, hydrogen, argon, helium, and neon; fluorocarbons such as trichlorofluoromethane (R11), dichlorodifluoromethane (R12), chlorodifluoromethane (R22), tetrachlorodifluoroethane (R112), dichlorofluoroethane (R141b), chlorodifluoroethane (R142b), difluoroethane (R152a), HFC-245fa, HFC-236ea, HFC-245ca, and HFC-225ca; hydrofluoroolefins such as HFO-1234y and HFO-1234ze(E); saturated hydrocarbons such propane, n-butane, i-butane, n-pentane, i-pentane, and neopentane; ethers such as dimethyl ether, diethyl ether, methyl ethyl ether, isopropyl ether, n-butyl ether, diisopropyl ether, furan, furfural, 2-methylfuran tetrahydrofuran, and tetrahydropyran; and chlorinated hydrocarbons such as methyl chloride and ethyl chloride. The air or compound that can be set in a gaseous state may be a single type used individually or a combination of two or more types. The blowing agent is preferably a blowing agent that has a low environmental impact and is not flammable or combustion-supporting, is more preferably an inorganic compound that is not flammable or combustion-supporting from a viewpoint of safety during handling, and is particularly preferably carbon dioxide or nitrogen from a viewpoint of solubility in resin and ease of handling.

The mass ratio of the blowing agent to the water-containing polyamide-based resin composition (concentration of the impregnated gas after absorption of the solvent (mass %)) is preferably 0.5 to 5.0%, more preferably 1.0 to 3.0%, and most preferably 1.5 to 2.0%. The concentration of the impregnated gas after water absorption can be measured by using the method described in Examples below.

No specific limitations are placed on the method to foam a blowing agent-impregnated polyamide-based resin composition in which the water-containing polyamide-based resin composition has been impregnated with the blowing agent. Examples of methods that can be used include a method in which the blowing agent-impregnated polyamide-based resin composition is suddenly transferred from a high-pressure atmosphere to a low-pressure atmosphere such that the gas of the foaming agent dissolved in the blowing agent-impregnated polyamide-based resin composition expands and causes foaming to take place and a method in which heating is performed using pressurized steam or the like to expand gas in the blowing agent-impregnated polyamide-based resin composition and cause foaming to take place. In particular, the latter method of heating and foaming is preferred due to the benefit of enabling uniform cell size within the resulting polyamide-based resin foam particles and the benefit of facilitating the production of polyamide-based resin foam particles having a low expansion ratio through control of the expansion ratio.

When the polyamide-based resin foam particles are expanded to a desired expansion ratio, the foam particles may be expanded in one stage in the expanding step, or may be expanded in multiple stages, such as secondary expanding and tertiary expanding. In particular, in a situation in which multi-stage foaming is performed, it is preferable that at each stage, the blowing agent-impregnated polyamide-based resin composition is pressure-treated with gas prior to foaming at each stage. Although no specific limitations are placed on the gas that is used in the pressure treatment as long as the gas is inert to the blowing agent-impregnated polyamide-based resin composition, an inorganic gas or hydrofluoroolefin having high safety as a gas and low global warming potential as a gas is preferable.

Examples of inorganic gases include air, carbon dioxide gas, nitrogen gas, oxygen gas, ammonia gas, hydrogen gas, argon gas, helium gas, and neon gas. Examples of the hydrofluoroolefins include HFO-1234y, HFO-1234ze (E), and the like. Air and carbon dioxide gas are particularly preferred in respect of ease of handling and costs. Examples of the method for pressurizing include, but are not limited to, a method for filling a pressurized tank with foam particles and supplying a gas to the tank.

EXAMPLES

Hereinafter, the present disclosure will be described more specifically with reference to examples and comparative examples. The present disclosure, however, is not limited to the following examples.

In the examples and comparative examples, the polyamide-based resin composition was molded into a pellet shape, and in the following description, the polyamide-based resin composition is referred to as "pellets for polyamide-based resin foam particles". The measurement methods used to measure the physical properties of pellets for polyamide-based resin foam particles and polyamide-based resin foam particles in the subsequently described examples and comparative examples will be described below.

(Crystallinity)

X-ray diffraction (XRD) measurements were carried out by a transmission method using an X-ray scattering apparatus (trade name: Nano-Viewer, manufactured by Rigaku Corporation). The measurement conditions were as follows: a first slit with 0.4 mm $\phi$, a second slit with 0.2 mm $\phi$, an X-ray wavelength of 0.154 nm, and a camera length of 78.8 mm. An imaging plate (IP) was used as a detector. The sample was a slice of the foamed molded article having a sample thickness of approximately 0.2 mm. A two-dimensional X-ray diffraction pattern obtained through the IP was converted to one dimension by circular averaging. Blank cell scattering correction was also carried out. The one-dimensional X-ray diffraction profile obtained in this manner was processed using software (Igor Pro Version 6.3.2.3, manufactured by WaveMetrics Inc.). Gaussian functions were assumed for peak shapes, and peak separation between diffraction peaks originating from crystals and analysis peaks from amorphous sources was performed.

(Water absorption ratio)

The water absorption ratio of pellets for polyamide-based resin foam particles was determined as follows. The weight of the pellets (W0) was weighed. The particles were then spread on a dry fiber sheet (Kim Towel manufactured by Nippon Paper Industries Co., Ltd.) and water adhered to surfaces was removed with another fiber sheet. The weight of the pellets (W1) was weighed. The pellets for polyamide-based resin foam particles were dried at 80 °C under vacuum for 6 hours, and the weight of the pellets (W2) was weighed again. The water absorption ratio (%) was calculated from these as follows: water absorption ratio = (W1 - W2) / W2 $\times$ 100

(Gas concentration)

The mass W' (g) of pellets for polyamide-based resin foam particles was measured. Subsequently, the mass W'a (g) of the expandable pellets to which water had been made to be contained was measured using the methods described in the following examples or comparative examples. After water and a blowing agent were contained, the mass W'b (g) of the expandable polyamide resin was measured again. The value obtained by dividing the difference between the mass W'b and the mass W' of the expandable polyamide resin by the mass W' of the raw polyamide ((W'b - W'a) / W') $\times$ 100 (mass %) was determined as the gas concentration contained in the pellets for polyamide-based resin foam particles.

(Average cell diameter)

A polyamide-based resin foam particle was dissected at the center with a feather razor blade or the like, and then fixed to the sample stand with conductive double-sided tape. The dissection was performed parallel to the surface originating from the diameter direction of the pellet. The above cross-sectional sample was observed under an SEM (model: VE-9800S, manufactured by Keyence Corporation) and a secondary electron image was obtained. The conditions to obtain the SEM image were as follows: the acceleration voltage: 1.3 kV, detector: secondary electrons, WD: 9.0 mm, spot diameter: 8, tilt: 0 °, degree of vacuum: high vacuum. The auto-focusing was employed for fully automatic adjustment to obtain an electronic image of the cross-sectional SEM image. The cell area of a closed cell was calculated from the SEM image using imaging software. The imaging software used was ImageJ 1.48v (freeware, version 1.46v, developed by Wayne Rasband, Jul 10, 2014). The calculation was performed as follows. The closed cell areas (S) of 30 closed cells were calculated, and the diameter d = 2(S/3.14)1/2 was determined for each closed cell assuming that the cell was circular. The addition average of the diameters of the 30 cells was determined as the average cell size (D2) of closed cells in the polyamide resin foam particle.

<Calculation of closed cell area>

First, an electronic image of the cross-sectional SEM to be analyzed was opened by opening "File" -> "Open". Then, the line selection tool "Straight" was used to measure the known distance within the image. The "Analyze" -> "Set Scale" was opened, and the measurement unit and the known distance were input to set the scale. Subsequently, the perimeter of the closed cell was enclosed using "Polygon selections" to measure the closed cell area. The area (S) was then calculated by "Analyze" -> "Measure".

(Internal communication ratio)

In a manner similar to the calculation of average cell diameter, a polyamide-based resin foam particle was dissected at the center with a feather razor blade or the like, and then fixed to the sample stand with conductive double-sided tape. The above cross-sectional sample was observed under an SEM (model: VE-9800S, manufactured by Keyence Corporation), and a secondary electron image was obtained. The conditions to obtain the SEM image were as follows: the acceleration voltage: 1.3 kV, detector: secondary electrons, WD: 9.0 mm, spot diameter: 8, tilt: 0 °, degree of vacuum: high vacuum. The auto-focusing was employed for fully automatic adjustment to obtain an electronic image of the cross-sectional SEM image. When obtaining the electronic image, an SEM image was obtained so that the entire polyamide-based resin foam particle was observable with the center of the measurement being on the center of the dissected plane of the foam particle. The number of holes caused by the internal communication which was observable at the back of the closed cells in the SEM image was counted. For each SEM image, the number of holes counted was divided by the number of closed cells in the screen to obtain a calculated value. The calculated values were obtained from five polyamide-based resin foam particles, and the addition average of the calculated values was determined as the internal communication ratio (X) of the polyamide-based resin foam particles.

When holes were counted, holes that were observable in the SEM image were counted as holes. In addition, when one closed cell had multiple holes, it was counted as 1. Closed cells with holes were defined as defective closed cells. When two or more cells were connected, such as when a hole was divided by a dissected plane with the feather razor blade or the like, the connected holes were counted as one. If cells were not clearly visible in the overall SEM image, the magnification was increased to 200$\times$. Enlarged electronic images were captured at five positions, with the centers being at the center and at positions halfway of the particle radius to the upper, lower, left, and right from the center. The addition average of the above-calculated values obtained from the five images was determined as the internal communication ratio. The internal communication ratio was calculated similarly for five polyamide resin particles, and the addition average value was determined and denoted as X. As illustrated in FIG. 1, the area where no cell wall was observed on the back side was identified as dark portion *dp,* and the dark portion was excluded upon counting the number of closed cells. On the other hand, the area in which a concave was observed and the cell wall was observed in the concave area was identified as a closed cell *if.* A hole *hl* that was observed in a part of the cell wall in the concave portion, which is the back side of the closed cell, was identified as a hole generated by internal communication.

(Closed cell ratio)

The weight W (g) of polyamide-based resin foam particles was measured and then the apparent volume Va ($m^3$) of the polyamide-based resin foam particles was measured by a water immersion method. The true volume (Vx) of the polyamide-based resin foam particles for which the apparent volume Va and weight W had been measured was then measured using an air pycnometer (produced by Beckman Coulter, Inc.). The closed cell ratio Y (%) was then calculated by the following formula.

$$Y\ (\%) = \{(Vx - W/\rho) / (Va - W/\rho)\} \times 100$$

where $\rho$ is the density of the polyamide-based resin foam particles (g/$cm^3$).

(Continuous cell ratio)

The weight W' (g) of polyamide-based resin foam particles was measured. The true volume (Vx') of the foam particles with the center of the particles dissected into two by a feather razor blade or the like was then measured using an air pycnometer (produced by Beckman Coulter, Inc.). The apparent volume Va' ($m^3$) of the polyamide-based resin foam particles was measured by a water immersion method. The continuous cell ratio Z (%) was then calculated by the following formula.

$$Z\ (\%) = \{1 - (Vx' - W'/\rho) / (Va' - W'/\rho)\} \times 100$$

where $\rho$ is the density of the polyamide-based resin foam particles (g/$cm^3$).

(Expansion ratio)

The value Va/W ($cm^3$/g) obtained by dividing the apparent volume Va of the aforementioned (closed cell ratio) by the weight W was determined as the expansion ratio of the polyamide-based resin foam particles.

(Thickness of cell wall)

A plane in which a polyamide-based resin foam particle had been dissected at the center thereof was imaged under a scanning electron microscope. The thickness of the cell wall was calculated from an SEM image using imaging software. The imaging software used was ImageJ 1.48v (freeware, version 1.46, developed by Wayne Rasband, Jul 10, 2014). For the cell walls between 30 closed cells, the resin portion along the line connecting the centers of each closed cell was defined as a cell wall. The thickness of the cell wall was calculated, and the addition average of the 30 cells was taken as the thickness of the average cell diameter of the polyamide-based resin foam particle.

(Average cell diameter near surface layer relative to average cell diameter in the inside)

A plane in which a polyamide-based resin foam particle had been dissected at the center thereof was imaged under a scanning electron microscope. The average cell diameter was calculated from an SEM image using imaging software. The imaging software used was ImageJ 1.48v (freeware, version 1.46, developed by Wayne Rasband, Jul 10, 2014). For average cell diameter near the surface layer, the closed cell areas (S1) of 30 closed cells present in the outmost layer were calculated, and the diameter d = 2(S1/3.14)1/2 was determined for each closed cell assuming that the cell was circular. The addition average of the diameters of the 30 cells was determined as the average cell size (D1) near the surface layer. For the average cell diameter in the inside, the closed cell areas (S2) of 30 closed cells present inside the three layers from the surface or deeper were calculated, and the diameter d = 2(S2/3.14)1/2 was determined for each closed cell assuming that the cell was circular. The addition average of the diameters of the 30 cells was determined as the average cell size (D2) in the inside. D1/D2 was calculated as the average cell diameter near the surface layer relative to the average cell diameter in the inside.

(Smallest cell diameter / largest cell diameter)

The smallest cell diameter and the largest cell diameter among the 30 average cell diameter in the inside calculated in (Average cell diameter near surface layer relative to average cell diameter in the inside) were used to calculate the smallest cell diameter / largest cell diameter.

(Specific volume)

A polyamide-based resin foamed molded article was cut into a rectangular parallelepiped specimen, and the mass W (g) was measured. The volume V (cc) was calculated, and V/W (cc/g) was determined to be used as the specific volume.

(10% compressive strength)

A test specimen with a length of 20 mm and a width of 20 mm was cut out from a polyamide-based resin foamed molded article. The obtained test specimen was cured until the difference between two weighed values obtained at 24-hour intervals after being left for 7 days in an atmosphere of a temperature of 23 °C and a relative humidity of 50% became 0.1% or less. After curing, the 10% compressive strength of the test specimen was determined in accordance with JIS K 7220.

(Example 1)

Nylon 666 (nylon 66/6) (trade name: Novamid 2430A, manufactured by DSM) as a polyamide-based resin was mixed with copper iodide and potassium iodide as heat stabilizers, and talc as a nucleating agent, in the proportions summarized in Table 1 for the polyamide-based resin and talc, 0.03 parts by mass for copper iodide, and 0.29 parts by mass for potassium iodide. They were then melt-kneaded in a twin-screw extruder (TEX30) at a discharge rate of 8 kg/hr under heated conditions, which was then extruded in strands from an 8-hole die and water-cooled in a cold water bath at 10 °C. The water-cooled mixture was cut while being collected at a rate that provided the following pellet diameter, and thus pellets for polyamide resin-based foam particles in pellet shape were produced. The obtained pellets for polyamide-based resin foam particles had an average pellet length of 1300 $\mu$m and an average pellet diameter of 900 $\mu$m.

The resulting pellets for polyamide-based resin foam particles were immersed in water at 50 °C for 1 hour and then dehydrated in a commercially available washing machine to obtain water-absorbing pellets for polyamide-based resin foam particles in pellet form containing 14 mass% of water.

The resulting water-absorbing pellets for polyamide-based resin foam particles in which water was made to be contained were placed in a pressure vessel at 10 °C and carbon dioxide gas at 4 MPa was blown for 12 hours to cause 1.6 mass% of carbon dioxide gas as a blowing agent to be absorbed in the water-absorbing pellets for polyamide-based resin foam particles. The blowing agent-impregnated pellets for polyamide-based resin foam particles impregnated with carbon dioxide gas were then transferred to a foaming apparatus. Polyamide resin-based foam particles were obtained by blowing air at 190 °C for 20 seconds.

The resulting polyamide-based resin foam particles were placed in a bag of a water-permeable nonwoven fabric, and immersed in a constant-temperature water bath heated to 50 °C for 30 minutes to obtain water-containing polyamide-based resin foam particles. The water absorption ratio of the water-containing polyamide-based resin foam particles was 12%.

The water-containing polyamide-based resin foam particles thus obtained were pressure treated by sealing the polyamide-based resin foam particles in an autoclave, introducing compressed air into the autoclave over 1 hour until the pressure inside the autoclave reached 0.95 MPa, and then maintaining the pressure of 0.95 MPa and the temperature of 70 °C for 24 hours.

The pressure-treated polyamide-based resin foam particles were loaded into the cavity (cavity dimensions: 300 mm in length, 300 mm in width, 20 mm in height) of an in-mold shaping mold in the amount corresponding to the 70% of the cavity volume, and the mold was clamped. The mold was installed in an in-mold foam molding machine.

Subsequently, a foamed molded article was molded by supplying saturated steam at 119 °C into the cavity for 30 seconds to cause thermal fusion of the polyamide-based resin foam particles.

Cooling water was supplied into the cavity of the mold to cool the resultant foamed molded article. Thereafter, the mold was opened and the foamed molded article was removed.

The results of the evaluations of Example 1 are summarized in Table 1.

[Table 1]

| | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Composition of pellets for polyamide-based resin foam particles | Polyamide-based resin | PA6 | parts by mass | | | | | | | | 100 | 100 | 100 |
| | | PA6/66 | parts by mass | 100 | 100 | 100 | 100 | 100 | 100 | 100 | | | |
| | | PA6I | parts by mass | | | | | | | | | | |
| | Nucleating agent | Talc | parts by mass | 0.8 | 0.8 | 0.8 | 0.8 | 0.8 | 0.8 | 0.8 | 0.8 | 0.8 | 0.8 |
| Evaluation of pellets for polyamide-based resin foam particles | Crystallinity | | | 0.01 | 0.01 | 0.01 | 0.01 | 0.01 | 0.01 | 0.01 | 0.095 | 0.095 | 0.095 |

EP 4 410 879 A1

| Production conditions for polyamide-based resin foam particles | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| | Water absorption conditions | | | Water absorption with warm water at 50 °C for 1 hr | Water absorption with warm water at 50 °C for 1 hr | Water absorption with warm water at 50 °C for 1 hr | Water absorption with warm water at 50 °C for 1 hr | Water absorption with warm water at 50 °C for 1 hr | Water absorption with water at 15 °C for 12 hr | Water absorption with warm water at 85 °C for 1 hr | Water absorption with warm water at 50 °C for 1 hr | Water absorption with water at 15 °C for 12 hr | Water absorption with warm water at 85 °C for 1 hr |
| | Water absorption ratio | | % | 14 | 14 | 14 | 14 | 14 | 18 | 12 | 10 | 14 | 7 |
| | Crystallinity (pellets for water-absorbing polyamide-based resin foam particles) | | | 0.14 | 0.14 | 0.14 | 0.14 | 0.14 | 0.25 | 0.13 | 0.2 | 0.29 | 0.19 |
| | Impregnation step | | | 10°C, 4 MPa, 12 hr | 10 °C, 4 MPa, 12 hr | 5°C, 4 MPa, 12 hr | 50 °C, 4 MPa, 12 hr | 10°C, 4 MPa, 12 hr | 10°C, 4 MPa, 12 hr | 10 °C, 4 MPa, 12 hr | 10 °C, 4 MPa, 12 hr | 10 °C, 4 MPa, 12 hr | 10 °C, 4 MPa, 12 hr |
| | Gas concentration | | % | 1.6 | 1.6 | 1.5 | 1.4 | 1.6 | 1.8 | 1.2 | 1.1 | 1.3 | 1.4 |
| | Foaming step | | | Foaming temperature of 190°C for 20 s | Foaming temperature of 170°C for 20 s | Foaming temperature of 190 °C for 20 s | Foaming temperature of 170 °C for 20 s | Foaming temperature of 180°C for 20 s | Foaming temperature of 180 °C for 20 s | Foaming temperature of 180 °C for 20 s | Foaming temperature of 230 °C for 20 s | Foaming temperature of 230 °C for 20 s | Foaming temperature of 230 °Cfor 20 s |

EP 4 410 879 A1

13

(continued)

| | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Evaluations of polyamide-based resin foam particles | Average cell diameter | | μm | 143 | 55 | 148 | 80 | 70 | 148 | 65 | 61 | 148 | 54 |
| | Internal communication ratio (X) | | % | 15 | 2 | 18 | 1 | 4 | 8 | 1 | 4.5 | 21 | 2 |
| | Closed cell ratio (Y) | | % | 88 | 95 | 78 | 97 | 90 | 92 | 95 | 91 | 83 | 88 |
| | X/Y | | | 0.17 | 0.02 | 0.23 | 0.01 | 0.04 | 0.09 | 0.01 | 0.05 | 0.25 | 0.02 |
| | Open cell ratio (Z) | | | 18 | 7 | 19 | 5 | 8 | 10 | 2 | 9 | 21 | 5 |
| | Z/Y | | | 0.20 | 0.07 | 0.24 | 0.05 | 0.09 | 0.11 | 0.02 | 0.10 | 0.25 | 0.06 |
| | Expansion ratio | | cm³/g | 6.5 | 1.9 | 8 | 1.5 | 5.1 | 4.9 | 5.2 | 4.8 | 3.8 | 4.7 |
| | Thicknesses of cell wall | | μm | 1 | 20 | 0.4 | 32 | 4 | 2 | 5 | 5 | 9 | 5 |
| | Average cell diameter near surface layer to average cell diameter in inside | | | 0.2 | 0.2 | 0.2 | 0.2 | 0.2 | 0.2 | 0.2 | 0.2 | 0.2 | 0.2 |
| | Smallest cell diameter / largest cell diameter | | | 0.7 | 0.7 | 0.7 | 0.7 | 0.7 | 0.7 | 0.7 | 0.7 | 0.7 | 0.7 |
| Evaluations of molded article | Specific volume | | cm³/g | 5.1 | 2.3 | 7.3 | 1.8 | 5.1 | 3.8 | 5.3 | 5 | 3.9 | 5.2 |
| | 10% compressive strength | 10 mm in thickness | Mpa | 2 | 14 | 0.7 | 19 | 4 | 4 | 5 | 4 | 3 | 4 |

(Example 2)

Blowing agent-impregnated pellets for polyamide-based resin foam particles containing 1.6 mass% of carbon dioxide were obtained in the same manner as in Example 1. The blowing agent-impregnated pellets for polyamide-based resin foam particles impregnated with carbon dioxide gas were then transferred to a foaming apparatus. Polyamide resin-based foam particles were obtained by blowing air at 170 °C for 20 seconds.

The polyamide-based resin foam particles thus obtained were subjected to water absorption treatment and pressure treatment in the same manner as in Example 1, and the temperature in the cavity was adjusted and the polyamide-based resin foam particles were thermally fused to form a molded article. The results of the evaluations of Example 2 are summarized in Table 1.

(Example 3)

Water-absorbing pellets for polyamide-based resin foam particles in the form of resin pellets containing 14 mass% of water were obtained in the same manner as in Example 1. The pellets were then placed in a pressure vessel at 5 °C and carbon dioxide gas at 4 MPa was blown for 12 hours to cause 1.5 mass% of carbon dioxide gas as a blowing agent to be absorbed in the water-absorbing pellets for polyamide-based resin foam particles. The blowing agent-impregnated pellets for polyamide-based resin foam particles impregnated with carbon dioxide gas were then transferred to a foaming apparatus. Polyamide resin-based foam particles were obtained by blowing air at 190 °C for 20 seconds.

The polyamide-based resin foam particles thus obtained were subjected to water absorption treatment and pressure treatment in the same manner as in Example 1, and the temperature in the cavity was adjusted and the polyamide-based resin foam particles were thermally fused to form a molded article. The results of the evaluations of Example 3 are summarized in Table 1.

(Example 4)

Water-absorbing pellets for polyamide-based resin foam particles in the form of resin pellets containing 14 mass% of water were obtained in the same manner as in Example 1. The pellets were then placed in a pressure vessel at 50 °C and carbon dioxide gas at 4 MPa was blown for 12 hours to cause 1.4 mass% of carbon dioxide gas as a blowing agent to be absorbed in the water-absorbing pellets for polyamide-based resin foam particles. The blowing agent-impregnated pellets for polyamide-based resin foam particles impregnated with carbon dioxide gas were then transferred to a foaming apparatus. Polyamide resin-based foam particles were obtained by blowing air at 170 °C for 20 seconds.

The polyamide-based resin foam particles thus obtained were subjected to water absorption treatment and pressure treatment in the same manner as in Example 1, and the temperature in the cavity was adjusted and the pre-expanded particles were thermally fused to form a molded article. The results of the evaluations of Example 4 are summarized in Table 1.

(Example 5)

Water-absorbing pellets for polyamide-based resin foam particles containing 1.6 mass% of carbon dioxide were obtained in the same manner as in Example 1. The blowing agent-impregnated pellets for polyamide-based resin foam particles impregnated with carbon dioxide gas were then transferred to a foaming apparatus. Polyamide resin-based foam particles were obtained by blowing air at 180 °C for 20 seconds.

The polyamide-based resin foam particles thus obtained were subjected to water absorption treatment and pressure treatment in the same manner as in Example 1, and the temperature in the cavity was adjusted and the pre-expanded particles were thermally fused to form a molded article. The results of the evaluations of Example 5 are summarized in Table 1.

(Example 6)

Pellets for polyamide-based resin foam particles in pellet form were obtained in the same manner as in Example 1. The resulting pellets for polyamide-based resin foam particles were immersed in water at 15 °C for 1 hour and then dehydrated in a commercially available washing machine to obtain water-absorbing pellets for polyamide-based resin foam particles containing 18 mass% of water.

Polyamide-based resin foam particles were obtained by causing 1.8% of carbon dioxide to be contained in the resulting water-absorbing pellets for polyamide-based resin foam particles in which water was made to be contained and performing pre-foaming in the same manner as in Example 5.

The polyamide-based resin foam particles thus obtained were subjected to water absorption treatment and pressure treatment in the same manner as in Example 1, and the temperature in the cavity was adjusted and the polyamide-based resin foam particles were thermally fused to form a molded article. The results of the evaluations of Example 6 are summarized in Table 1.

(Example 7)

Pellets for polyamide-based resin foam particles in pellet form were obtained in the same manner as in Example 1. The resulting pellets for polyamide-based resin foam particles were immersed in water at 85 °C for 1 hour and then dehydrated in a commercially available washing machine to obtain water-absorbing pellets for polyamide-based resin foam particles containing 12 mass% of water.

Polyamide-based resin foam particles were obtained by causing 1.2% of carbon dioxide to be contained in the resulting water-absorbing pellets for polyamide-based resin foam particles in which water was made to be contained and performing pre-foaming in the same manner as in Example 5.

The polyamide-based resin foam particles thus obtained were subjected to water absorption treatment and pressure treatment in the same manner as in Example 1, and the temperature in the cavity was adjusted and the polyamide-based resin foam particles were thermally fused to form a molded article. The results of the evaluations of Example 7 are summarized in Table 1.

(Example 8)

Pellets for polyamide-based resin foam particles in pellet form were obtained in the same manner as in Example 1, except that nylon 6 (trade name: UBE nylon 1030B, manufactured by Ube Industries, Ltd.) was used instead of nylon 666 (nylon 66/6) (trade name: Novamid 2430A, manufactured by DSM). The resulting pellets for polyamide-based resin foam particles were immersed in water at 50 °C for 1 hour and then dehydrated in a commercially available washing machine to obtain water-absorbing pellets for polyamide-based resin foam particles containing 10 mass% of water.

In the same manner as in Example 5, 1.1 mass% of carbon dioxide was caused to be contained in the resulting water-absorbing pellets for polyamide-based resin foam particles in which water was made to be contained. The water-absorbing pellets for polyamide-based resin foam particles impregnated with carbon dioxide gas were then transferred to a foaming apparatus. Polyamide resin-based foam particles were obtained by blowing air at 230 °C for 20 seconds.

The polyamide-based resin foam particles thus obtained were subjected to water absorption treatment and pressure treatment in the same manner as in Example 1, and the temperature in the cavity was adjusted and the polyamide-based resin foam particles were thermally fused to form a molded article. The results of the evaluations of Example 8 are summarized in Table 1.

(Example 9)

A molded article was obtained in the same manner as in Example 8, except that the conditions for water absorption of the obtained pellets for polyamide-based resin foam particles were changed so that the pellets were immersed in water at 15 °C for 12 hours, resulting in water-absorbing pellets for polyamide-based resin foam particles in pellet form containing 14 mass% of water. The results of the evaluations of Example 9 are summarized in Table 1.

(Example 10)

A molded article was obtained in the same manner as in Example 8, except that the conditions for water absorption of the obtained pellets for polyamide-based resin foam particles were changed so that the pellets were immersed in water at 85 °C for 1 hour, resulting in water-absorbing pellets for polyamide-based resin foam particles containing 7 mass% of water. The results of the evaluations of Example 10 are summarized in Table 1.

(Example 11)

Pellets for polyamide-based resin foam particles in pellet form were obtained in the same manner as in Example 1, except that a mixture of 80 parts by mass of nylon 666 (nylon 66/6) (trade name: Novamid 2430A, manufactured by DSM) and 20 parts by mass of nylon 6I (trade name: Leona 7000, manufactured by Asahi Kasei Corporation) were used instead of nylon 666. The resulting pellets for polyamide-based resin foam particles were immersed in water at 50 °C for 1 hour and then dehydrated in a commercially available washing machine to obtain water-absorbing pellets for polyamide-based resin foam particles containing 13 mass% of water.

In the resulting water-absorbing pellets for polyamide-based resin foam particles in which water was made to be contained, 1.6 mass% of carbon dioxide was caused to be contained in the same manner as in Example 1. The blowing agent-impregnated pellets for polyamide-based resin foam particles impregnated with carbon dioxide gas were then transferred to a foaming apparatus. Polyamide resin-based foam particles were obtained by blowing air at 180 °C for 20 seconds.

The polyamide-based resin foam particles thus obtained were subjected to water absorption treatment and pressure treatment in the same manner as in Example 1, and the temperature in the cavity was adjusted and the polyamide-based resin foam particles were thermally fused to form a molded article. The results of the evaluations of Example 11 are summarized in Table 2.

[Table 2]

| | | | | Example 11 | Example 12 | Example 13 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|
| Composition of pellets for polyamide-based resin foam particles | Polyamide-based resin | PA6 | parts by mass | | | | 100 | 100 | 100 | 100 | | |
| | | PA6/66 | parts by mass | 80 | 100 | 100 | | | | | 100 | 100 |
| | | PA6I | parts by mass | 20 | | | | | | | | |
| | Nucleating agent | Talc | parts by mass | 0.8 | 5 | 0.8 | 1 | 1 | 0.8 | 0.8 | 0.8 | 0.8 |
| Evaluation of pellets for polyamide-based resin foam particles | Crystallinity | | | 0.02 | 0.01 | 0.01 | 0.25 | 0.25 | 0.35 | 0.2 | 0.35 | 0.15 |

EP 4 410 879 A1

(continued)

| Production conditions for polyamide-based resin foam particles | | | Example 11 | Example 12 | Example 13 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| | Water absorption conditions | | Water absorption with warm water at 50 °C for 1 hr | Water absorption with warm water at 50 °C for 1 hr | Water absorption with warm water at 50 °C for 1 hr | Upon pelletization | Upon pelletization | Water absorption and impregnation simultaneously at 136 °C | Water absorption with warm water at 50 °C for 1 hr | Water absorption for 1 hr | - |
| | Water absorption ratio | % | 13 | 13 | 15 | 1.5 | 1.5 | 5 | 5.5 | 6.2 | 2 |
| | Crystallinity (pellets for water-absorbing polyamide-based resin foam particles) | | 0.18 | 0.14 | 0.09 | 0.31 | 0.31 | 0.39 | 0.32 | 0.40 | - |
| | Impregnation step | | 10 °C, 4 MPa, 12 hr | 10 °C, 4 MPa, 12 hr | 10 °C, 4 MPa, 12 hr | Chemical foaming (iso-pentane) | Chemical foaming (iso-pentane) | Simultaneous with water absorption | 10 °C, 4 MPa, 12 hr | 10 °C, 4 MPa, 3 hr | 10°C, 4 MPa, 3 hr |
| | Gas concentration | % | 1.6 | 1.6 | 1.6 | - | - | 0.4 | 0.9 | 0.5 | 0.6 |
| | Foaming step | | Foaming temperature of 180 °C for 20 s | Foaming temperature of 200 °C for 10 s | Foaming temperature of 180 °C for 20 s | Foaming temperature of 110 °C for 60 s | Foaming temperature of 104 °C for 60 s | Foaming temperature of 136°C | Foaming temperature of 250 °C for 20 s | Foaming temperature of 210 °C | Foaming temperature of 190 °C for 20 s |

| | | | | Example 11 | Example 12 | Example 13 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|
| Evaluations of polyamide-based resin foam particles | Average cell diameter | | $\mu$m | 95 | 147 | 132 | 173 | 71 | 120 | 189 | 160 | 160 |
| | Internal communication ratio (X) | | % | 9 | 17 | 13 | 4 | 51 | 55 | 67 | 45 | 30 |
| | Closed cell ratio (Y) | | % | 88 | 83 | 91 | 89 | 92 | 73 | 74 | 89 | 90 |
| | X/Y | | | 0.10 | 0.17 | 0.14 | 0.04 | 0.55 | 0.75 | 0.91 | 0.51 | 0.33 |
| | Open cell ratio (Z) | | | 10 | 19 | 15 | 5 | 44 | 56 | 65 | 40 | 33 |
| | Z/Y | | | 0.11 | 0.23 | 0.16 | 0.06 | 0.48 | 0,77 | 0.88 | 0.45 | 0.37 |
| | Expansion ratio | | cm$^3$/g | 5 | 6.3 | 6.4 | 1.9 | 4.8 | 6.7 | 3.2 | 4.1 | 3.3 |
| | Thicknesses of cell wall | | $\mu$m | 3.2 | 2 | 1.2 | 61 | 3 | 0.8 | 4 | 4 | 30 |
| | Average cell diameter near surface layer to average cell diameter in inside | | | 0.2 | 0,2 | 0.2 | 0.9 | 0.7 | 0.7 | 0.2 | 0.7 | 0.7 |
| | Smallest cell diameter / largest cell diameter | | | 0.7 | 0.05 | 0.7 | 0.08 | 0.1 | 0.2 | 0.07 | 0.07 | 0.2 |
| Evaluations of molded article | Specific volume | | cm$^3$/g | 3 | 5.1 | 5 | 1.8 | 5 | 5 | 2.5 | 3.5 | 5 |
| | 10% compressive strength | 10 mm in thickness | Mpa | 6 | 1.5 | 2 | 13 | 1 | 0.5 | 4 | 1 | 1.1 |

(Example 12)

Pellets for polyamide-based resin foam particles in pellet form were obtained in the same manner as in Example 1, except that 5 parts by weight of talc were added instead of 0.8 parts by weight. The resulting pellets for polyamide-based resin foam particles were immersed in water at 50 °C for 1 hour and then dehydrated in a commercially available washing machine to obtain water-absorbing pellets for polyamide-based resin foam particles containing 13 mass% of water. Blowing agent-impregnated pellets for polyamide-based resin foam particles containing 1.6 mass% of carbon dioxide were obtained in the same manner as in Example 1. The blowing agent-impregnated pellets for polyamide-based resin foam particles impregnated with carbon dioxide gas were then transferred to a foaming apparatus and air at 200 °C was blown for 10 seconds to obtain polyamide-based resin foam particles.

The polyamide-based resin foam particles thus obtained were subjected to water absorption treatment and pressure treatment in the same manner as in Example 1, and the temperature in the cavity was adjusted and the polyamide-based resin foam particles were thermally fused to form a molded article. The results of the evaluations of Example 12 are summarized in Table 2.

(Example 13)

Pellets for polyamide-based resin foam particles in pellet form were obtained in the same manner as in Example 1, except that ice was placed in a cold water bath for rapid cooling upon the preparation of the base resin in pellet shape. The resulting pellets for polyamide-based resin foam particles were immersed in water at 50 °C for 1 hour and then dehydrated in a commercially available washing machine to obtain water-absorbing pellets for polyamide-based resin foam particles containing 15 mass% of water.

In the resulting water-absorbing pellets for polyamide-based resin foam particles in which water was made to be contained, 1.6 mass% of carbon dioxide was caused to be contained in the same manner as in Example 1. The blowing agent-impregnated pellets for polyamide-based resin foam particles impregnated with carbon dioxide gas were then transferred to a foaming apparatus. Polyamide resin-based foam particles were obtained by blowing air at 180 °C for 20 seconds.

The polyamide-based resin foam particles thus obtained were subjected to water absorption treatment and pressure treatment in the same manner as in Example 1, and the temperature in the cavity was adjusted and the polyamide-based resin foam particles were thermally fused to form a molded article. The results of the evaluations of Example 13 are summarized in Table 2.

(Comparative Example 1)

Pellets for polyamide-based resin foam particles in pellet form were obtained by mixing 100 parts of nylon 6 (trade name: UBE nylon 1030B, manufactured by Ube Industries, Ltd.), which had been dried under vacuum at 80 °C for 4 hours in advance, with 1.5 parts of water, 1 part of isopentane, and 1 part of talc as a nucleating agent, and then melt-kneading under heating and pressurizing conditions in a twin-screw extruder, which was then extruded into strands, cooled in a cold water bath, and cut.

The resulting blowing agent-impregnated pellets for polyamide-based resin foam particles containing water and isopentane as blowing agents were transferred to a foaming apparatus. Polyamide resin-based foam particles were obtained by blowing steam at 110 °C for 60 seconds.

The water-containing polyamide-based resin foam particles thus obtained were pressure treated by sealing the polyamide-based resin foam particles in an autoclave, introducing compressed air into the autoclave over 1 hour until the pressure inside the autoclave reached 0.24 MPa, and then maintaining the pressure of 0.95 MPa and the temperature of 70 °C for 24 hours.

The resultant polyamide-based resin foam particles were loaded into the cavity (cavity dimensions: 300 mm in length, 300 mm in width, 20 mm in height) of an in-mold shaping mold in the amount corresponding to the 70% of the cavity volume, and the mold was clamped. The mold was installed in an in-mold foam molding machine.

Subsequently, a molded article was produced by supplying saturated steam at 119 °C into the cavity for 30 seconds to cause thermal fusion of the polyamide-based resin foam particle.

Cooling water was supplied into the cavity of the mold to cool the resultant foamed molded article. Thereafter, the mold was opened and the foamed molded article was removed. The results of the evaluations of Comparative Example 1 are summarized in Table 2.

(Comparative Example 2)

A molded article was obtained in the same manner as in Comparative Example 1, except the temperature at which the blowing agent-impregnated pellets for polyamide-based resin foam particles containing water and isopentane as blowing agents were foamed was changed to 104 °C. The results of the evaluations of Comparative Example 2 are summarized in Table 2.

(Comparative Example 3)

The resin described in Table 1 was fed to an extruder and melt-kneaded. The melt-kneaded product was extruded as a single-layer strand with a circular cross section through narrow holes of a spinneret attached to the end of the extruder. After water-cooling, the extruded strands were cut by a pelletizer so that the mass of one pellet is approximately 2.0 mg and dried to obtain pellets for polyamide-based resin foam particles.

[Production of polyamide-based resin foam particles]

A 400-liter autoclave equipped with a stirrer was charged with 10 kg of the resulting polyamide-based resin particles and 310 liters of water as a dispersion liquid. Further, 3.0 parts by mass of kaolin as a dispersing agent and 0.08 parts by mass of sodium alkylbenzenesulfonate per 100 parts by mass of the pellets for polyamide-based resin foam particles were added to the dispersion. The content in the autoclave was heated from room temperature (23 °C) while stirring, and after the temperature reached 136 °C, carbon dioxide as a blowing agent was introduced into the autoclave until the indicated pressure in the autoclave reached the impregnation pressure of 4.0 MPa. The time until the temperature rose from room temperature (23 °C) to reach 136 °C was 30 minutes. The holding temperature and pressure were then maintained for 15 minutes.

The blowing agent-impregnated pellets for polyamide-based resin foam particles impregnated with the blowing agents were then released under atmospheric pressure (0.1 MPa) together with the dispersion solution. The resulting polyamide-based resin foam particles were cured in an oven at 60 °C for 24 hours and then slowly cooled to obtain the resulting polyamide-based resin foam particles.

[Production of polyamide-based resin foam particle molded article]

Next, a foam particle molded article was produced using the polyamide-based resin foam particles.

First, the obtained polyamide-based resin foam particles were loaded into a flat mold of 200 mm in length × 250 mm in width × 50 mm in thickness, and in-mold molding was carried out by steam heating to obtain a plate-shaped foam particle molded article. After the heating was carried out as follows, preheating (exhaust step) was carried out by supplying steam for 5 seconds with the drain valves of both sides of the mold open. Thereafter, steam was supplied from the moving side mold, steam was then supplied from the fixed side mold, and heating was then carried out until the molding heating vapor pressure was reached (molding pressure = molding vapor pressure).

After the heating was completed, the pressure was released and the molded article was water-cooled until the surface pressure due to the foaming force of the molded article decreased to 0.02 MPa (gauge pressure). Thereafter, the mold was opened and the molded article was removed from the mold. The resulting molded article was cured in an oven at 80 °C for 12 hours and then slowly cooled to room temperature. In this way, a polyamide foam particle molded article was obtained. The results of the evaluations of Comparative Example 3 are summarized in Table 2.

(Comparative Example 4)

Pellets for polyamide-based resin foam particles in pellet form were obtained in the same manner as in Example 8. The resulting pellets for polyamide-based resin foam particles were then aged at 180 °C for 3 hours. This increased the crystallinity of the pellets for polyamide-based resin foam particles to 0.2.

The resulting pellets for polyamide-based resin foam particles were immersed in water at 50 °C for 1 hour and then dehydrated in a commercially available washing machine to obtain water-absorbing pellets for polyamide-based resin foam particles containing 5.5 mass% of water.

In the resulting water-absorbing pellets for polyamide-based resin foam particles in which water was made to be contained, 0.9 mass% of carbon dioxide was caused to be contained in the same manner as in Example 1, and the blowing agent-impregnated pellets for polyamide-based resin foam particles impregnated with carbon dioxide gas were then transferred to a foaming apparatus. Polyamide resin-based foam particles were obtained by blowing air at 250 °C for 20 seconds.

The polyamide-based resin foam particles thus obtained were subjected to water absorption treatment and pressure treatment in the same manner as in Example 1, and the temperature in the cavity was adjusted and the polyamide-based resin foam particles were thermally fused to form a molded article. The results of the evaluations of Comparative Example 4 are summarized in Table 2.

(Comparative Example 5)

Pellets for polyamide-based resin foam particles in pellet form were obtained in the same manner as in Comparative Example 3. The resulting 3 kg of pellets for polyamide-based resin foam particles were completely immersed in 6 liters of water for 1 hour.

Next, the pellets were removed from the water and charged in an autoclave, and carbon dioxide was introduced into the autoclave as a blowing agent until the pressure in the autoclave reached 4 MPa. Next, the autoclave was maintained at 10 °C and 4 MPa for 3 hours.

The blowing agent-impregnated pellets for polyamide-based resin foam particles impregnated with the blowing agent were then removed from the autoclave and transferred to a foaming vessel filled with oil medium heated to 210 °C. The blowing agent-impregnated pellets for polyamide-based resin foam particles were then immersed to foam them. After the surfaces of the resulting polyamide-based resin foam particles were washed with normal hexane to remove oil, the polyamide-based resin foam particles were cured in an oven at 60 °C for 24 hours, followed by slow cooling to obtain polyamide-based resin foam particles. The polyamide-based resin foam particles thus obtained were subjected to water absorption treatment and pressure treatment in the same manner as in Example 1, and the temperature in the cavity was adjusted and the polyamide-based resin foam particles were thermally fused to form a molded article. The results of the evaluations of Comparative Example 5 are summarized in Table 2.

(Comparative Example 6)

Pellets for polyamide-based resin foam particles were prepared in the same manner as in Example 1, except that the average particle diameter of the resulting pellets for polyamide-based resin foam particles was 1.4 mm. Polyamide-based resin foam particles were then obtained in the same manner as in Example 1, except that the treatment to contain water was not carried out. The water absorption ratio before foaming was 2%.

The polyamide-based resin foam particles thus obtained were subjected to water absorption treatment and pressure treatment in the same manner as in Example 1, and the temperature in the cavity was adjusted and the polyamide-based resin foam particles were thermally fused to form a molded article. The results of the evaluations of Comparative Example 6 are summarized in Table 2.

REFERENCE SIGNS LIST

dp    Dark portion
hl    Hole
if    Closed cell

**Claims**

1. Polyamide-based resin foam particles having an average cell diameter of 5 to 150 $\mu$m and satisfying at least one of the following (A) and (B):

   (A) a ratio of X/Y of an internal communication ratio (X) to a closed cell ratio (Y) is 0.25 or less; and
   (B) a ratio Z/Y of a continuous cell ratio (Z) to a closed cell ratio (Y) is 0.25 or less.

2. The polyamide-based resin foam particles according to claim 1, wherein
   an expansion ratio is 2 to 6 cm$^3$/g

3. The polyamide-based resin foam particles according to claim 1 or 2, wherein
   a thickness of a cell wall is 0.5 to 30 $\mu$m.

4. The polyamide-based resin foam particles according to claim 1 or 2, wherein
   a ratio of an average cell diameter near a surface layer to the average cell diameter in an inside is 0.5 or less.

5. The polyamide-based resin foam particles according to claim 1 or 2, wherein
   a smallest cell diameter / a largest cell diameter is 1/10 or more and less than 1.

6. A polyamide-based resin composition for producing the polyamide-based resin foam particles according to claim 1 or 2, wherein
a crystallinity of a polyamide-based resin is 0.1 or less.

7. A production method of polyamide-based resin foam particles, comprising:

a water absorption step of causing a polyamide-based resin composition to absorb water to a water absorption ratio of 6 mass% or more; and
an impregnation and foaming step of causing the polyamide-based resin composition in which water has been absorbed in the water absorption step to be impregnated with a foaming gas, and foaming to take place.

8. The production method of polyamide-based resin foam particles according to claim 7, wherein
a water absorption temperature to the polyamide-based resin composition in the water absorption step is 0 to 100 °C.

9. The production method of polyamide-based resin foam particles according to claim 7 or 8, wherein
a crystallinity of a water-containing polyamide-based resin composition after water absorption by the water absorption step is 0.3 or less.

10. The production method of polyamide-based resin foam particles according to claim 7 or 8, wherein
the crystallinity of the polyamide-based resin composition before water absorption by the water absorption step is 0.1 or less.

Fig 1

## INTERNATIONAL SEARCH REPORT

| International application No. |
|---|
| **PCT/JP2022/036322** |

### A.    CLASSIFICATION OF SUBJECT MATTER

***C08J 9/22***(2006.01)i
FI:   C08J9/22 CFG

According to International Patent Classification (IPC) or to both national classification and IPC

### B.    FIELDS SEARCHED

Minimum documentation searched (classification system followed by classification symbols)

C08J9/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| X | WO 2016/052387 A1 (SEKISUI PLASTICS CO., LTD.) 07 April 2016 (2016-04-07) claims, examples, fig. 1-9 | 1–5, 7–8 |
| X | WO 2021/125264 A1 (ASAHI KASEI KABUSHIKI KAISHA) 24 June 2021 (2021-06-24) claims, examples 1-14 | 1–5, 7–8 |
| X | JP 61-268737 A (ASAHI CHEM. IND. CO., LTD.) 28 November 1986 (1986-11-28) claims, examples 1-8 (particularly example 2) | 1–5, 7–8 |
| A | WO 2016/052647 A1 (SEKISUI PLASTICS CO., LTD.) 07 April 2016 (2016-04-07) claims, example 8 | 1-10 |
| A | JP 2018-53080 A (SEKISUI PLASTICS CO., LTD.) 05 April 2018 (2018-04-05) claims, examples 1-5 | 1-10 |
| A | JP 8-311230 A (ASAHI CHEM. IND. CO., LTD.) 26 November 1996 (1996-11-26) claims, examples 1-7 | 1-10 |
| A | JP 58-201826 A (TEIJIN LIMITED) 24 November 1983 (1983-11-24) claims, examples 1-5 | 1-10 |

☑ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 December 2022** | **13 December 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**

International application No.

**PCT/JP2022/036322**

**C. DOCUMENTS CONSIDERED TO BE RELEVANT**

| Category* | Citation of document, with indication, where appropriate, of the relevant passages | Relevant to claim No. |
|---|---|---|
| A | JP 7-179645 A (GUNZE LIMITED) 18 July 1995 (1995-07-18)<br>    claims, examples 1-3 | 1-10 |
| A | JP 2011-105879 A (ASAHI KASEI CHEMICALS CORPORATION) 02 June 2011 (2011-06-02)<br>    claims, example 1 | 1-10 |

Form PCT/ISA/210 (second sheet) (January 2015)

## INTERNATIONAL SEARCH REPORT
### Information on patent family members

International application No.

**PCT/JP2022/036322**

| Patent document cited in search report | | | Publication date (day/month/year) | Patent family member(s) | | | Publication date (day/month/year) |
|---|---|---|---|---|---|---|---|
| WO | 2016/052387 | A1 | 07 April 2016 | US 2017/0283555 A1 claims, examples, fig. 1-9<br>EP 3202835 A1<br>KR 10-2017-0036090 A<br>CN 106687511 A<br>TW 201619256 A | | | |
| WO | 2021/125264 | A1 | 24 June 2021 | (Family: none) | | | |
| JP | 61-268737 | A | 28 November 1986 | (Family: none) | | | |
| WO | 2016/052647 | A1 | 07 April 2016 | US 2017/0157814 A1 claims, example 8<br>EP 3202829 A1<br>KR 10-2017-0032458 A<br>CN 106604955 A<br>TW 201617215 A | | | |
| JP | 2018-53080 | A | 05 April 2018 | (Family: none) | | | |
| JP | 8-311230 | A | 26 November 1996 | (Family: none) | | | |
| JP | 58-201826 | A | 24 November 1983 | US 4444911 A claims, examples 1-12<br>EP 98938 A2 | | | |
| JP | 7-179645 | A | 18 July 1995 | (Family: none) | | | |
| JP | 2011-105879 | A | 02 June 2011 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021162158 A
- JP 6653049 B
- WO 2011134996 A1